# EUROPÄISCHE PATENTSCHRIFT

(11) **EP 3 798 031 B1**
(45) Veröffentlichungstag und Bekanntmachung des Hinweises auf die Patenterteilung: **18.02.2026**
(21) Anmeldenummer: 20186669.6
(22) Anmeldetag: 20.07.2020
(51) Int. Cl.: B60H 1/00, B62D 33/06

(54) **LANDWIRTSCHAFTLICHE ARBEITSMASCHINE**
AGRICULTURAL MACHINE
MACHINE DE TRAVAIL AGRICOLE

(30) Priorität: 24.09.2019 DE 102019125614
(43) Veröffentlichungstag der Anmeldung: 31.03.2021
(73) Patentinhaber: CLAAS Tractor S.A.S., 78141 Vélizy-Villacoublay Cedex (FR)
(72) Erfinder: Cossin, Auélien, 92140 Clamart (FR); Villette, Clement, 92190 Meudon (FR); Landrou, Jeróme, 91160 Longjumeau (FR); Perrot, Guilaume, 95000E Eaubonne (FR); Gicquel, Guénolè, 78690 Les Essarts-le-Roi (FR)
(74) Vertreter: CLAAS Gruppe

(56) Entgegenhaltungen:
- EP-A2- 2 921 327
- WO-A2-2012/087502
- US-A- 4 605 259

## Beschreibung

Die Erfindung betrifft eine landwirtschaftliche Arbeitsmaschine, umfassend eine Fahrerkabine, in der ein Führerstand für einen Maschinenführer der Arbeitsmaschine eingerichtet ist, wobei die Fahrerkabine eine Mehrzahl von aufrecht orientierten Pfosten, ein auf den Pfosten gelagertes Dach sowie mindestens ein aufrecht orientiertes Fenster umfasst.

Eine solche Arbeitsmaschine ist aus EP 1 190 939 bekannt. Die Pfosten sind hier zwei durchgängige gebogene Hohlprofile. Zunehmend größere Fahrerkabinen solcher Arbeitsmaschinen stellen hohe Anforderungen an den Überrollschutz.

Im Hintergrund der Erfindung ist aus EP 2 174 808 bekannt, Zuluft für eine Klimaanlage in der Fahrerkabine durch Hohlprofile anzusaugen.

Dokument WO 2012/087502 A2 offenbart den Oberbegriff des Anspruchs 1.

Der Erfindung liegt die Aufgabe zugrunde, den Überrollschutz zu verbessern und die Ansaugung von Zuluft zu verbessern.

Ausgehend von der bekannten Arbeitsmaschine wird erfindungsgemäß vorgeschlagen, mindestens einen durchgängigen, U-förmigen Rahmen vorzusehen, der zwei endseitige Schenkel sowie einen die Schenkel verbindenden Riegel aufweist, wobei die Schenkel des Rahmens jeweils einen der Pfosten bilden. Die Verbindung der Pfosten durch den Riegel verbessert die Stabilität der Fahrerkabine und damit den Überrollschutz.

In einer erfindungsgemäßen Arbeitsmaschine ist der Rahmen einstückig ausgebildet. Der Rahmen kann dann besonders einfach, insbesondere ohne Verbindungsmittel hergestellt werden. Der Rahmen ist erfindungsgemäß frei von Fügungsstellen, insbesondere Schweißnähten. Der Rahmen vermeidet dann Schwachstellen.

Vorzugsweise ist in einer erfindungsgemäßen Arbeitsmaschine der Riegel bogenförmig ausgebildet. Die Form des Riegels ist dann der technisch stabilsten Form eines Kreises angenähert.

Vorzugsweise ist in einer solchen Arbeitsmaschine der Riegel in Richtung des Dachs gekrümmt. Im Überrollfall liegt die Arbeitsmaschine dann auf dem Riegel. Alternativ kann der Riegel auch in der dem Dach abgewandten Richtung gekrümmt sein.

Erfindungsgemäß bilden in einer solchen Arbeitsmaschine die Schenkel jeweils eine B-Säule der Fahrerkabine, wobei sich der Riegel des Rahmens zumindest im Wesentlichen in eine Querrichtung der Arbeitsmaschine erstreckt. Die B-Säulen sind eine im Überrollfall besonders gefährdete Teilstruktur der Fahrerkabine.

Vorzugsweise weist in einer erfindungsgemäßen Arbeitsmaschine der Rahmen zumindest über eine Teillänge ein Hohlprofil auf. Der Rahmen ist dann einerseits über diese Teillänge besonders verwindungssteif, andererseits kann der Rahmen dort Versorgungsleitungen der Arbeitsmaschine aufnehmen. Besonders bevorzugt weist der Rahmen über seine gesamte Länge das Hohlprofil auf. Der Rahmen ist dann über seine gesamte Länge besonders verwindungssteif.

Erfindungsgemäß weist eine solche Arbeitsmaschine eine Klimaanlage auf mit einem Sauggebläse zum Ansaugen eines Zuluftstroms durch einen Innenraum des Rahmens in die Klimaanlage. Der Rahmen übernimmt dann zugleich die Funktion eines Lüftungskanals.

Vorzugsweise tritt in einer solchen Arbeitsmaschine der Zuluftstrom an einem Lufteinlass in den Rahmen ein und unterhalb des Lufteinlasses an einem Luftauslass aus dem Rahmen aus. Der Lufteinlass liegt dann im Betriebsfall außerhalb der besonders mit Schwebstoffen belasteten bodennahen Luftschichten.

Vorzugsweise wird in einer solchen Arbeitsmaschine der Zuluftstrom beim Eintreten in den Rahmen, innerhalb des Rahmens und/oder beim Austreten aus dem Rahmen stumpfwinklig umgelenkt. Der Zuluftstrom erzeugt dann im Betrieb der Arbeitsmaschine besonders geringe Geräusche.

Vorzugsweise nimmt in einer erfindungsgemäßen Arbeitsmaschine der Rahmen eines der Fenster auf. Das Fenster kann insbesondere den Rahmen vollständig ausfüllen.

Vorzugsweise weist eine solche Arbeitsmaschine eine schwingungsreduzierende Dichtung zwischen dem Rahmen und dem Fenster auf. Die Geräuschbelastung in der Fahrerkabine ist dann reduziert.

Das Dach kann mittelbar oder unmittelbar auf den Pfosten gelagert sein.

Die Erfindung wird nachstehend anhand eines Ausführungsbeispiels näher erläutert. Die Figuren zeigen in
- Fig. 1:: eine erfindungsgemäße Arbeitsmaschine,
- Fig. 2:: die Fahrerkabine der Arbeitsmaschine,
- Fig. 3:: eine Kraftlinie in einem Kabinengehäuse der Fahrerkabine im Überrollfall,
- Fig. 4:: Zuluftströme in dem Kabinengehäuse,

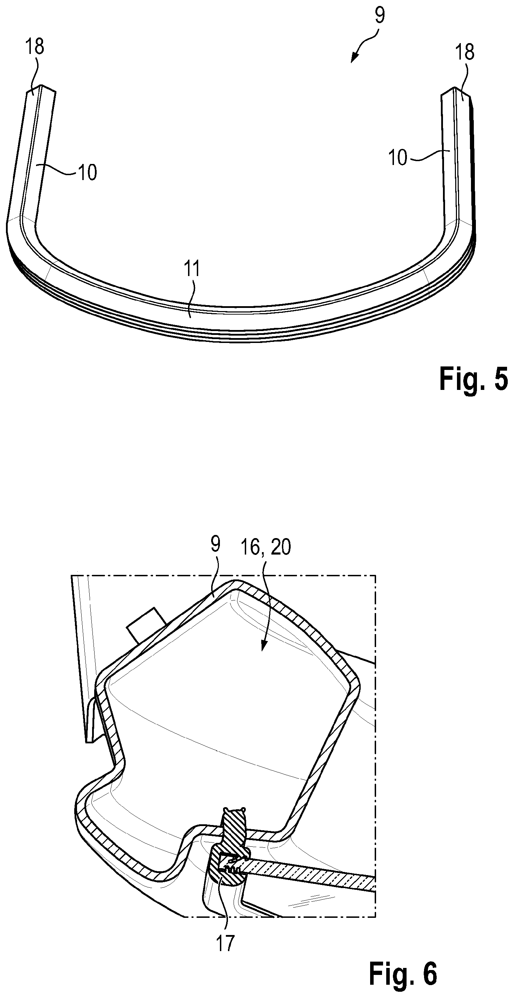

- Fig. 5:: einen Rahmen des Kabinengehäuses und
- Fig. 6:: einen Schnitt durch den Rahmen.

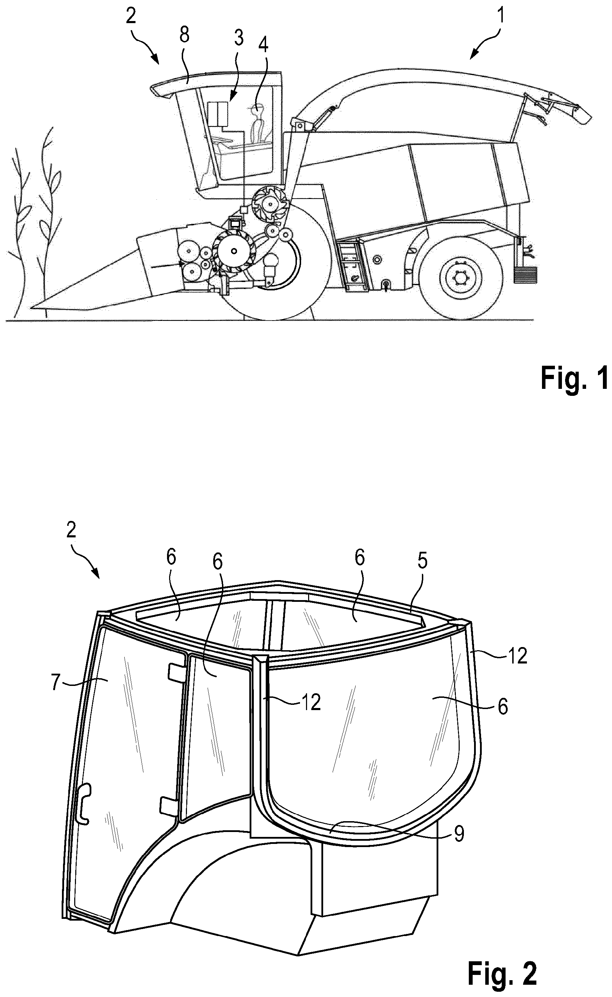

Die in Figur 1 dargestellte Arbeitsmaschine 1 weist eine in Figur 2 im Detail dargestellte Fahrerkabine 2 auf mit einem Führerstand 3 für einen Maschinenführer 4. Die Fahrerkabine 2 weist ein Kabinengehäuse 5 und an dem Kabinengehäuse 5 angebrachte Fenster 6, eine Tür 7, sowie ein Dach 8 auf.

Das Kabinengehäuse 5 weist einen durchgängigen, U-förmigen Rahmen 9 mit zwei endseitigen Schenkeln 10 und einem die Schenkel 10 verbindenden Riegel 11 auf. Die Schenkel 10 bilden jeweils einen von vier aufrecht stehenden Pfosten 12 des Kabinengehäuses 5, auf denen das Dach 8 gelagert ist. Der Riegel 11 erstreckt sich bogenförmig in einer Querrichtung 13 der Arbeitsmaschine 1 und ist in dem Dach 8 abgewandter Richtung gekrümmt.

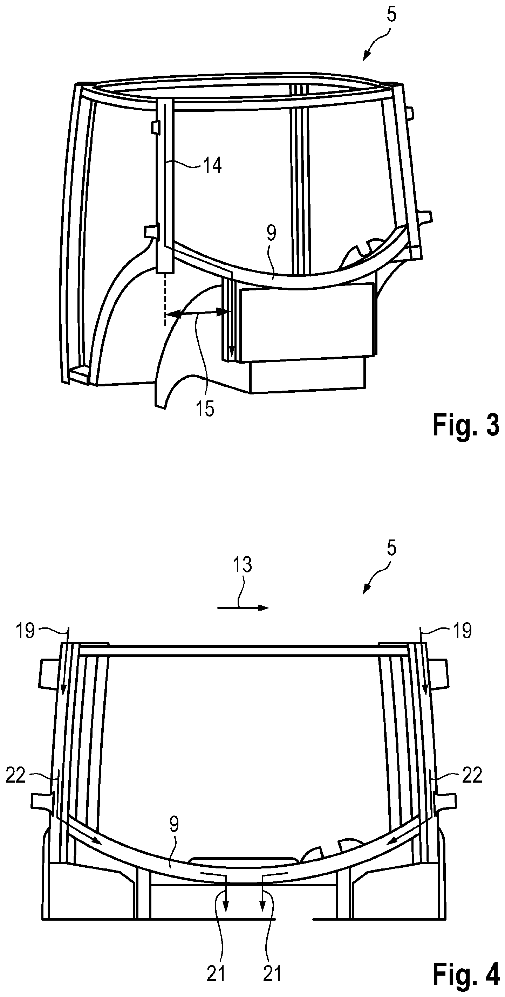

Im Überrollfall - insbesondere wenn die Arbeitsmaschine 1 kopfüber auf dem Dach 8 liegt - tragen die Pfosten 12 die Last der Arbeitsmaschine 1. Figur 3 zeigt beispielhaft eine Kraftlinie 14 in diesem Fall durch einen der Pfosten 12. Durch die Lagerung des Rahmens 9 an der Fahrerkabine 2 ist der auf den Pfosten 12 wirkende Hebelarm 15 der Last nur gering.

Der Rahmen 9 weist über seine gesamte Länge ein Hohlprofil 16 auf und nimmt in einer umlaufenden schwingungsreduzierenden Dichtung 17 das rückwärtige Fenster 6 der Fahrerkabine 2 auf. An den äußersten Enden 18 der Schenkel 10 sind Lufteinlässe 21 für Zuluft für eine nicht dargestellte Klimaanlage der Fahrerkabine 2 angeordnet.

Die Zuluft wird mittels eines Sauggebläses der Klimaanlage durch die Lufteinlässe 21, einen Innenraum 20 des Rahmens 9 und mittig an dem Riegel 11 angebrachte Luftauslässe 21 in die Klimaanlage gesaugt. Die Zuluftströme 22 werden beim Einströmen in den Rahmen 9, innerhalb des Rahmens 9 und beim Austreten aus dem Rahmen 9 immer nur stumpfwinklig umgelenkt, um Verwirbelungen und dadurch entstehende Luftgeräusche zu vermeiden.

### Bezugszeichenliste

- 1: Arbeitsmaschine
- 2: Fahrerkabine
- 3: Führerstand
- 4: Maschinenführer
- 5: Kabinengehäuse
- 6: Fenster
- 7: Tür
- 8: Dach
- 9: Rahmen
- 10: Schenkel
- 11: Riegel
- 12: Pfosten
- 13: Querrichtung
- 14: Kraftlinie
- 15: Hebelarm
- 16: Hohlprofil
- 17: Dichtung
- 18: Ende
- 19: Lufteinlass
- 20: Innenraum
- 21: Luftauslass
- 22: Zuluftstrom

## Patentansprüche

1. Landwirtschaftliche Arbeitsmaschine (1), umfassend eine Fahrerkabine (2), in der ein Führerstand (3) für einen Maschinenführer (4) der Arbeitsmaschine (1) eingerichtet ist,
wobei die Fahrerkabine (2) eine Mehrzahl von aufrecht orientierten Pfosten (12), ein auf den Pfosten (12) gelagertes Dach (8) sowie mindestens ein aufrecht orientiertes Fenster (6) umfasst,
aufweisend mindestens einen durchgängigen, U-förmigen Rahmen (9), der zwei endseitige Schenkel (10) sowie einen die Schenkel (10) verbindenden Riegel (11) aufweist,
wobei die Schenkel (10) des Rahmens (9) jeweils einen der Pfosten (12) bilden,
wobei der Rahmen (9) einstückig ausgebildet ist,
wobei der Rahmen (9) frei von Fügungsstellen, insbesondere Schweißnähten, ist,wobei die Schenkel (10) jeweils eine B-Säule der Fahrerkabine (2) bilden,
**dadurch gekennzeichnet, dass** sich der Riegel (11) des Rahmens (9) zumindest im Wesentlichen in eine Querrichtung (13) der Arbeitsmaschine (1) erstreckt,
und **gekennzeichnet durch** eine Klimaanlage mit einem Sauggebläse zum Ansaugen eines Zuluftstroms (22) durch einen Innenraum (20) des Rahmens (9) in die Klimaanlage.

2. Arbeitsmaschine (1) nach dem vorgenannten Anspruch, ***dadurch gekennzeichnet, dass*** der Riegel (11) bogenförmig ausgebildet ist.

3. Arbeitsmaschine nach dem vorgenannten Anspruch, ***dadurch gekennzeichnet, dass*** der Riegel in Richtung des Dachs gekrümmt ist.

4. Arbeitsmaschine (1) nach einem der vorgenannten Ansprüche, ***dadurch gekennzeichnet, dass*** der Rahmen (9) zumindest über eine Teillänge, vorzugsweise über seine gesamte Länge, ein Hohlprofil (16) aufweist.

5. Arbeitsmaschine (1) nach einem der vorgenannten Ansprüche, ***dadurch gekennzeichnet, dass*** der Zuluftstrom (22) an einem Lufteinlass in den Rahmen (9) ein- und unterhalb des Lufteinlasses an einem Luftauslass aus dem Rahmen (9) austritt.

6. Arbeitsmaschine (1) nach einem der vorgenannten Ansprüche, ***dadurch gekennzeichnet, dass*** der Zuluftstrom (22) beim Eintreten in den Rahmen (9), innerhalb des Rahmens (9) und/oder beim Austreten aus dem Rahmen (9) stumpfwinklig umgelenkt wird.

7. Arbeitsmaschine (1) nach einem der vorgenannten Ansprüche, ***dadurch gekennzeichnet, dass*** der Rahmen (9) eines der Fenster (6) aufnimmt.

8. Arbeitsmaschine (1) nach dem vorgenannten Anspruch, ***gekennzeichnet durch*** eine schwingungsreduzierende Dichtung (17) zwischen dem Rahmen (9) und dem Fenster (6).

## Claims

1. An agricultural working machine (1), comprising a driver's cabin (2), in which a driver's station (3) for a machine driver (4) of the working machine (1) is fitted,
wherein the driver's cabin (2) comprises a plurality of posts (12) which are upright in orientation, a roof (8) mounted on the posts (12) as well as at least one window (6) which is upright in orientation,
having
at least one continuous, U-shaped frame (9) which has two end legs (10) as well as a bar (11) connecting the legs (10),
wherein the legs (10) of the frame (9) respectively form one of the posts (12),
wherein the frame (9) is formed in one piece,
wherein the frame (9) is free from joints, in particular weld seams, wherein the legs (10) respectively form a B-pillar of the driver's cabin (2),
**characterized in that**
the bar (11) of the frame (9) extends at least substantially in a transverse direction (13) of the working machine (1),
and **characterized by**
an air conditioning system with a suction fan for drawing in a supply air flow (22) through an interior space (20) of the frame (9) into the air conditioning system.

2. The working machine (1) according to the preceding claim, ***characterized in that*** the bar (11) is arc-shaped in construction.

3. The working machine according to the preceding claim, ***characterized in that*** the bar is curved in the direction of the roof.

4. The working machine (1) according to one of the preceding claims, ***characterized in that*** the frame (9) has a hollow profile (16) over at least part of its length, preferably over its entire length.

5. The working machine (1) according to one of the preceding claims, ***characterized in that*** the supply air flow (22) enters the frame (9) at an air inlet and exits the frame (9) at an air outlet which is below the air inlet.

6. The working machine (1) according to one of the preceding claims, ***characterized in that*** the supply air flow (22) is deflected at an obtuse angle when entering the frame (9), within the frame (9) and/or when exiting the frame (9).

7. The working machine (1) according to one of the preceding claims, ***characterized in that*** the frame (9) accommodates one of the windows (6).

8. The working machine (1) according to the preceding claim, ***characterized by*** a vibration-reducing seal (17) between the frame (9) and the window (6).

## Revendications

1. Machine de travail (1) agricole, comprenant une cabine de conduite (2) dans laquelle est agencé un poste de conduite (3) pour un conducteur (4) de la machine de travail (1),
dans laquelle la cabine de conduite (2) comporte une pluralité de montants (12) orientés verticalement, un toit (8) posé sur les montants (12), ainsi qu'au moins une fenêtre (6) orientée verticalement,
présentant au moins un cadre (9) continu en forme de U qui comporte deux branches (10) côté extrémités, ainsi qu'une traverse (11) reliant les branches (10),
les branches (10) du cadre (9) formant respectivement l'un des montants (12),
le cadre (9) étant réalisé d'un seul tenant,
le cadre (9) étant exempt de points d'assemblage, notamment de soudures, les branches (10) constituant respectivement un montant B de la cabine de conduite (2),
**caractérisée en ce que**
la traverse (11) du cadre (9) s'étend au moins pour l'essentiel dans une direction transversale (13) de la machine de travail (1),
et **caractérisée en ce qu'**elle présente
un dispositif de climatisation doté d'un ventilateur aspirant destiné à aspirer un flux d'air entrant (22) à travers un espace intérieur (20) du cadre (9), pour le faire entrer dans le dispositif de climatisation.

2. Machine de travail (1) selon la revendication précédente, **caractérisée en ce que** la traverse (11) est réalisée en forme d'arc.

3. Machine de travail selon la revendication précédente, **caractérisée en ce que** la traverse est incurvée en direction du toit.

4. Machine de travail (1) selon une des revendications précédentes, **caractérisée en ce que** le cadre (9) présente un profilé creux au moins sur une partie de sa longueur, de préférence sur toute sa longueur.

5. Machine de travail (1) selon une des revendications précédentes, **caractérisée en ce que** le flux d'air entrant (22) entre dans le cadre (9) par une admission d'air et sort du cadre (9) par une sortie d'air située en dessous de l'admission d'air.

6. Machine de travail (1) selon une des revendications précédentes, **caractérisée en ce que** le flux d'air entrant (22) est dévié sous un angle obtus, à l'intérieur du cadre (9) lors de son entrée dans le cadre (9), et/ou lors de sa sortie du cadre (9).

7. Machine de travail (1) selon une des revendications précédentes, **caractérisée en ce que** le cadre (9) accueille une des fenêtres (6).

8. Machine de travail (1) selon la revendication précédente, **caractérisée en ce qu'**elle présente un joint d'étanchéité (17) réducteur de vibrations entre le cadre (9) et la fenêtre (6).
